Europäisches Patentamt

European Patent Office

Office européen des brevets

(19)

(11) **EP 0 777 893 B1**

(12) **FASCICULE DE BREVET EUROPEEN**

(45) Date de publication et mention
de la délivrance du brevet:
**09.04.2003 Bulletin 2003/15**

(21) Numéro de dépôt: **96924918.4**

(22) Date de dépôt: **02.07.1996**

(51) Int Cl.$^7$: **G06T 11/00**

(86) Numéro de dépôt international:
**PCT/FR96/01026**

(87) Numéro de publication internationale:
**WO 97/002545 (23.01.1997 Gazette 1997/05)**

(54) **PROCEDE DE RECONSTRUCTION D'UNE IMAGE 3D AVEC AMELIORATION DU CONTRASTE ET DE LA RESOLUTION**

DREIDIMENSIONALES BILDREKONSTRUKTIONSVERFAHREN MIT VERBESSERUNG VON AUFLÖSUNG UND KONTRAST

METHOD FOR RECONSTRUCTING A 3D IMAGE WITH ENHANCED CONTRAST AND RESOLUTION

(84) Etats contractants désignés:
**DE GB NL**

(30) Priorité: **03.07.1995 FR 9508002**

(43) Date de publication de la demande:
**11.06.1997 Bulletin 1997/24**

(73) Titulaires:
• **COMMISSARIAT A L'ENERGIE ATOMIQUE**
**75015 Paris (FR)**
• **G E Medical Systems S.A.**
**78533 Buc Cédex (FR)**

(72) Inventeurs:
• **GUILLEMAUD, Régis**
**F-38000 Grenoble (FR)**
• **PAYOT, Etienne**
**F-38000 Grenoble (FR)**
• **TROUSSET, Yves**
**F-91120 Palaiseau (FR)**
• **PRETEUX, Françoise**
**F-75013 Paris (FR)**

(74) Mandataire: **Dubois-Chabert, Guy et al**
**BREVATOME**
**3, rue du Docteur Lanceraux**
**75008 Paris (FR)**

(56) Documents cités:
**US-A- 4 769 756**

• **GEOPHYSICS, NOV. 1993, USA, vol. 58, no. 11, ISSN 0016-8033, pages 1655-1661, XP000565199 MICHELENA R J: "Singular value decomposition for cross-well tomography"**
• **MEDICAL PHYSICS, vol. 20, no. 6, 1 Novembre 1993, pages 1675-1684, XP000422128 XU X -L ET AL: "ITERATIVE ALGEBRAIC RECONSTRUCTION ALGORITHMS FOR EMISSION COMPUTED TOMOGRAPHY: A UNIFIED FRAMEWORK AND ITS APPLICATION TO POSITRON EMISSION TOMOGRAPHY"**
• **COMPUTERS IN BIOLOGY AND MEDICINE, SEPT. 1992, UK, vol. 22, no. 5, ISSN 0010-4825, pages 305-323, XP000566869 JOHNSON C R ET AL: "A computer model for the study of electrical current flow in the human thorax"**
• **ULTRASONIC IMAGING, APRIL 1981, USA, vol. 3, no. 2, ISSN 0161-7346, pages 113-143, XP000566859 BRANDENBURGER G H ET AL: "Effects of anisotropy in the ultrasonic attenuation of tissue on computed tomography"**

EP 0 777 893 B1

**Description**

Domaine de l'invention

L'invention concerne un procédé pour reconstruire une image tridimensionnelle contrastée et de bonne résolution d'un objet défini par des valeurs prises par une propriété en un réseau de volumes élémentaires de l'image 3D de l'objet.

L'invention concerne en outre une application de ce procédé à la réalisation d'une cartographie d'atténuation de l'objet, la propriété de l'objet étant alors l'atténuation des rayonnements par cet objet.

L'invention trouve de nombreuses applications dans le domaine de l'imagerie et, en particulier, dans le domaine de l'imagerie médicale, notamment pour l'étude de l'arbre vasculaire en imagerie X à partir d'une cartographie d'atténuation de cet arbre vasculaire.

Etat de la technique

Dans le domaine de la reconstruction tridimensionnelle (3D) d'images, l'homme de l'art utilise bien souvent des méthodes de résolution analytique ou algébrique.

Parmi les méthodes analytiques, l'algorithme le plus fréquemment utilisé par l'homme de l'art est l'algorithme de filtrage/reprojection décrit par NATERRER dans "The mathematics of computerized tomography", J. WILEY and Sons, 1986. Cet algorithme est d'ailleurs considéré comme l'algorithme de référence dans ce domaine.

Dans une application à la cartographie d'atténuation qui sera décrite plus en détail ultérieurement, cet algorithme est utilisé essentiellement lorsque la géométrie d'acquisition choisie est une géométrie parallèle ou éventail.

Au contraire, pour une géométrie d'acquisition conique, on peut utiliser, par exemple :

- l'algorithme analytique direct par filtrage et rétroprojection en géométrie conique décrit par FELKAMP C. A. et al dans "Practical cone-beam algorithm", 1984, J. Opt. Soc. Am. ;
- l'algorithme analytique direct par réarrangement dans le domaine Radon via la transformée de HILBERT de la dérivée première de la transformée de Radon, décrite par SMITH B. D. dans "Image reconstruction from cone-beam projections : necessary and sufficient conditions and reconstruction methods", 1985, IEEE Trans. on Med. Imag. et par KUDO H., SAITO T. dans "3D tomograhic image reconstruction from incomplete cone-beam projections", Proc. Topical Meeting OSA, Signal Recovery and Synthesis, Cape Code (USA), 1989 ;
- l'algorithme analytique direct par réarrangement dans le domaine Radon via la dérivée première de la transformée Randon, décrit par GRANGEAT dans "Analyse d'un système d'imagerie 3D par reconstruction à partir de radiographie X en géométrie conique", 1987, Thèse de doctorat présentée à l'Ecole Nationale Supérieure des Télécommunications (Paris) et décrite également dans la demande de brevet européenne EP-A-0 29240.

Bien que ces algorithmes permettent un traitement rapide, ils ont l'inconvénient majeur d'être inutilisables lorsque les conditions d'acquisition sont difficiles c'est-à-dire, par exemple, dans les cas où la discrétisation angulaire de l'acquisition n'est pas régulière ou bien lorsque le secteur angulaire ou le nombre de projections est trop faible ou encore dans le cas où la géométrie d'acquisition est non-stable, ce qui crée des mesures floues.

Les méthodes algébriques utilisent généralement des projections mesurées de la propriété de l'objet puis, à partir de ces prbjections mesurées, reconstruisent une première image 3D de l'objet. On peut alors déduire de cette première image 3D des projections (appelées projections calculées de l'objet), que l'on compare aux projections réelles de l'objet. Le résultat de cette comparaison entre les projections réelles et les projections calculées permet de mettre à jour l'image 3D reconstruite. A partir de cette nouvelle image 3D, de nouvelles projections calculées sont déduites pour être à nouveau comparées aux projections réelles. Le procédé se poursuit ainsi, de façon itérative, jusqu'à l'obtention d'une image 3D satisfaisante.

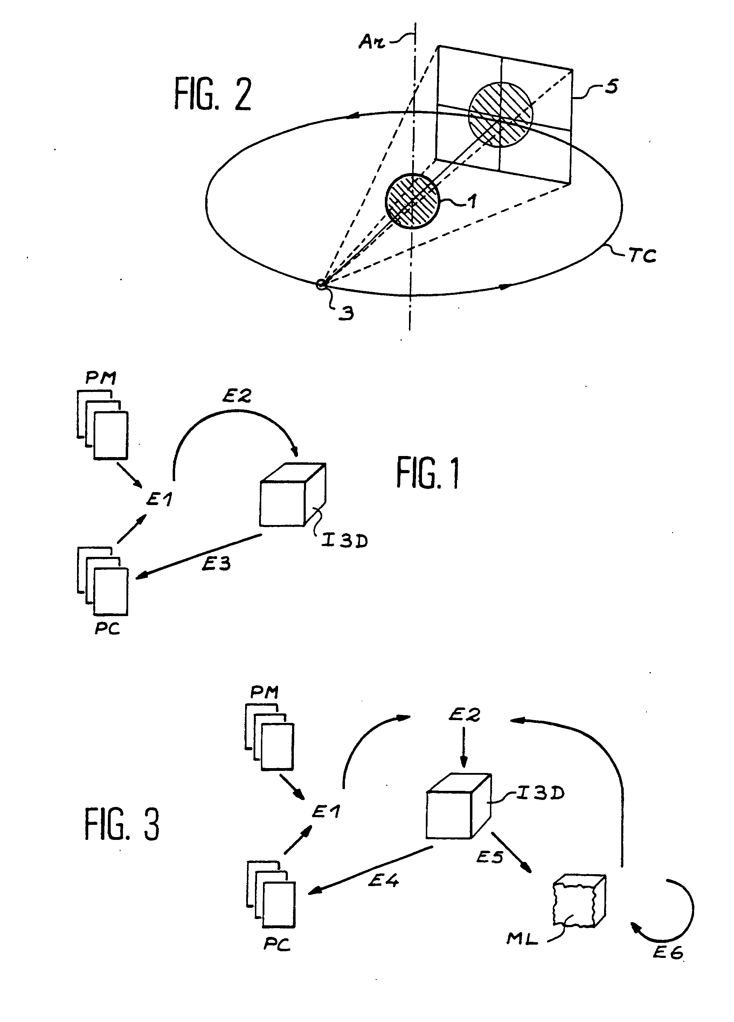

Pour une meilleure compréhension générale de ce procédé connu de reconstruction de type algébrique, on pourra se reporter à la figure 1, montrant un schéma général de reconstruction d'image 3D par une méthode algébrique classique.

Sur cette figure 1, on a référencé, PR, les projections réelles déterminées pour la propriété étudiée et, PC, les projections calculées à partir de l'image 3D reconstruite. L'image 3D reconstruite est notée I3D. De plus, on a référencé, E1, l'étape de comparaison des projections réelles avec les projections calculées, E2, l'étape de mise à jour de l'image 3D et, E3, l'étape de reprojection pour déduire les nouvelles projections calculées.

On comprendra ainsi qu'une telle méthode algébrique est itérative ; elle repose donc, d'une part, sur une description de la relation liant l'image 3D à reconstruire aux données mesurées par un système d'équations linéaires $Y = A*X$ (où * est une multiplication matrice par vecteur), et, d'autre part, sur la résolution de ce système d'équations linéaires par une méthode itérative. Une méthode du type de celle décrite précédemment est explicitée, par exemple, par GULLBERG et al. dans le document : "An iterative reconstruction algorithm for single photon emission computed tomography with cone-beam geometry", 1989, Int. J. of Imag. Sys. and Techn. 1, 169-186.

En particulier, ces méthodes itératives peuvent être utilisées pour réaliser des cartographies d'émission ou d'atténuation de rayonnements par l'objet.

Dans le cas, par exemple, d'une cartographie d'atténuation, le procédé de reconstruction de l'image 3D d'un objet peut être mis en oeuvre après que des projections d'atténuation réelles aient été déterminées. Celles-ci sont déterminées à partir de mesures d'émission effectuées au moyen d'un système tomographique 3D tel que celui montré sur la figure 2.

Ce système tomographique comporte :

- une source de rayonnements 3 apte à envoyer des photons vers l'objet 1 à étudier ; et
- un moyen de détection 5 disposé symétriquement à la source 3, par rapport à l'objet. Ce moyen de détection 5 peut être un amplificateur d'images radiologiques munie de plusieurs détecteurs.

Dans l'application représenté sur cette figure 2, la source de rayonnement 3 est un tube émetteur de rayons X.

Cette source de rayonnements 3 est apte à prendre plusieurs positions par rapport à l'objet 1, positions situées sur une trajectoire, par exemple circulaire Tc. Cette trajectoire Tc se situe dans un plan transaxial qui est le plan perpendiculaire à l'axe de rotation Ar. Le moyen de détection subit alors sensiblement les mêmes mouvements de rotation que la source de rayonnements 3, sur la trajectoire Tc.

Sur la figure 2, on a représenté l'axe de rotation Ar passant par le centre de l'objet 2. Il peut toutefois être décentré par rapport audit objet 2.

Pour une application à la cartographie, on peut effectuer, grâce à ce dispositif, des mesures en transmission, c'est-à-dire que l'on peut mesurer sur le détecteur, le nombre de photons arrivés sur le détecteur après l'atténuation créée par l'objet. A partir de ces mesures en transmission, on peut déterminer des projections d'atténuations qui sont en fait l'atténuation totale par l'objet suivant une droite choisie. Cette projection d'atténuation est donc l'intégrale de la mesure de l'atténuation locale suivant la droite de projection.

Plus précisément, dans le cas de l'imagerie vasculaire, la mesure de projection d'atténuation se fait, dans un premier temps, en effectuant une première acquisition de transmission de référence, sans produit de contraste injecté au patient. Cette première acquisition de référence est notée No. On effectue ensuite différentes acquisitions de transmission avec injection de produit de contraste, selon des directions différentes autour de l'objet étudié. Ces acquisitions de transmission sont notées N. Chacune de ces acquisitions contient pour chaque pixel du détecteur le nombre de photons émis par la source et qui n'ont pas été atténués par l'objet. On peut alors déterminer la projection de la différence d'atténuation $X_\mu$ avant et pendant l'injection de produit de contraste, grâce à la formule suivante :

$$\frac{N}{No} = e^{-X_\mu},$$

$X\mu$ étant la projection mesurée.

Pour mettre en oeuvre un procédé de reconstruction d'image 3D par une méthode algébrique, dans le cadre d'une application à la cartographie d'atténuation, il est possible d'utiliser plusieurs types d'algorithmes tels que ceux décrits par GEMAN et al. dans : "A comprehensive statistical model for Single photon Emission Tomographie", 1993, MARKOV Random Field, Academic Press Inc., et par SAUER et al. dans : "Bayesian estimation od 3D objects from few radiographs", 1994, IEEE Trans. on Nuclear Science, Vol. 41.

Cependant, bien que ces méthodes algébriques s'adaptent assez facilement à toutes les géométries d'acquisition et qu'elles peuvent être mises en oeuvre pour des conditions d'acquisition difficiles, elles ont l'inconvénient de nécessiter un nombre de calculs relativement important, ce qui rend le procédé long et fastidieux.

De plus, dans le cas de conditions d'acquisition difficiles (faible nombre de points de vue, secteur angulaire limité, géométrie d'acquisition non stable,...), ces méthodes de reconstruction algébriques classiques ont de grandes difficultés à fournir un résultat de qualité suffisante pour permettre une lecture correcte et sûre de la cartographie obtenue. En effet, dans de telles conditions, les images obtenues manquent très souvent de contraste et leur résolution est insuffisante, ce qui rend la lecture de l'image difficile.

Pour améliorer l'image 3D obtenue, il est possible d'effectuer des post-traitements de reconstruction tels que, par exemple, une segmentation ou un rehaussement de contours. Un algorithme itératif pour améliorer l'image comportant une boucle de base de deux étapes distinctes (reconstruction et post-traitement) est décrit par MEDOFF et al. dans : "Iterative convolution backprojection algorithms for image reconstruction from limited data", 1983, J. Opt. Soc. Am., Vol. 73, et par DINTEN dans : "Tomographie à partir d'un nombre limité de projections : régularisation par des champs markoviens", 1990, Thèse de Doctorat, Université de Paris.

Un autre procédé pour améliorer l'image 3D à obtenir consiste à introduire dans l'algorithme de reconstruction, un modèle prédéfini. Ce procédé est décrit, dans son application à l'imagerie nucléaire TEMP (tomographie d'émission monophotonique), par exemple, par GEMAN et al. dans : "A comprehensive statistical model for Single photon Emission Tomographie", 1993, MARKOV Random Field, Academic Press Inc., et par SAUER et al. dans : "Bayesian estimation od 3D objects from few radiographs", 1994, IEEE Trans. on Nuclear Science, Vol. 41.

Cependant, aucun de ces procédés n'apporte un contraste et une résolution suffisamment bons pour permettre, dans le cas de l'imagerie médicale, d'obtenir une cartographie de qualité suffisante pour qu'un médecin puisse y étudier précisément des pathologies complexes telles qu'un anévrisme ou une malformation arthério-veineuse.

Exposé de l'invention

L'invention a pour but de remédier aux inconvénients des différents procédés énoncés précédemment. A cette fin, elle propose un procédé de reconstruction d'une image tridimensionnelle utilisant un modèle anisotrope et permettant d'obtenir une image 3D contrastée et de bonne résolution.

L'image 3D est constituée de la juxtaposition régulière de volumes élémentaires contigüs.

A tout volume élémentaire de l'image de l'objet, on associe un modèle local consistant à lui attribuer des paramètres caractérisant l'objet et notamment la direction de moindre variation de la propriété.

La direction de moindre variation n'est définie de manière unique que pour des objets ayant une structure fortement anisotrope (par exemple le réseau vasculaire, des fibres dans un matériau, etc.).

Plus précisément, l'invention concerne un procédé de reconstruction d'une image tridimensionnelle d'un objet, définie par des valeurs prises par une propriété de l'objet en un réseau de volumes élémentaires de l'image 3D de l'objet, consistant :

- à déterminer à partir des acquisitions de mesures, par prétraitement, des projections mesurées de la propriété correspondant à des mesures de sommes de ladite propriété selon des lignes localisées par un réseau bidimensionnel associé à des moyens de détection, chaque acquisition étant effectuée pour une orientation particulière des moyens de détection par rapport à l'objet ;
- à reconstruire l'image 3D de l'objet par itération.

Ce procédé se caractérise par le fait que cette reconstruction de l'image 3D de l'objet consiste :

a) à partir des projections mesurées, à effectuer une reconstruction d'une première image 3D de l'objet ;
b) à estimer, pour chaque volume élémentaire, des paramètres locaux définissant un modèle anisotrope utilisant une direction de moindre variation de la propriété, en fonction de cette image 3D reconstruite ;
    et, pour tous les volumes élémentaires et toutes les projections mesurées :

c) à partir de l'image 3D reconstruite, à déduire des projections calculées de la propriété passant par au moins un volume élémentaire préalablement choisi ;
d) à comparer au moins une projection calculée avec la projection mesurée correspondant au même volume élémentaire pour en déduire une différence de projection ;
e) à déterminer, pour chaque volume élémentaire, un coefficient de poids en fonction des paramètres du modèle anisotrope, et des valeurs de la propriété sur des volumes élémentaires voisins dudit volume élémentaire choisi ; et
f) à effectuer une mise à jour de chaque volume élémentaire, volume élémentaire par volume élémentaire, à partir de la différence de projection et d'une moyenne pondérée par le coefficient de poids de la valeur de la propriété des volumes élémentaires voisins du volume élémentaire choisi, pour obtenir une nouvelle image 3D de l'objet ; puis

g) à réitérer au moins les étapes c) à f) en prenant comme image reconstruite, la nouvelle image 3D, jusqu'à l'obtention de l'image 3D désirée de l'objet.

Avantageusement, chaque modèle local est anisotrope et définit localement une direction principale orthogonale au gradient de la propriété du volume élémentaire respectif.

Selon un autre mode de réalisation de l'invention, le procédé consiste, avant la réitération de l'étape c), à réestimer, pour chaque volume élémentaire, les paramètres locaux définissant un nouveau modèle anisotrope en fonction de la dernière mise à jour de l'image 3D reconstruite de la propriété.

Selon l'invention, le procédé consiste à effectuer un premier lissage suivant la direction du modèle anisotrope, en fonction des coefficients de poids déterminés à l'étape e) et, éventuellement à effectuer un ou plusieurs moyennage(s) (calcul de valeurs moyennes) suivant respectivement, une ou plusieurs direction(s) transverse(s) à la direction principale du modèle anisotrope.

Dans le cas d'une application de l'invention à la réalisation d'une cartographie de l'atténuation des rayonnements par l'objet, la propriété de l'objet est l'atténuation de rayonnements émis par une source de rayonnement vers les moyens de détection, à travers ledit objet, ladite source étant apte à prendre plusieurs positions par rapport à l'objet et l'image 3D obtenue est une cartographie d'atténuation. Dans ce cas, le procédé consiste tout d'abord, pour chaque position de la source, à effectuer une acquisition de mesure de transmission des rayonnements par l'objet à partir de laquelle est déterminée une projection réelle de l'atténuation.

Brève description des figures

- La figure 1, déjà décrite, représente un schéma de reconstruction d'image 3D par une méthode algébrique connue ;
- la figure 2, déjà décrite, représente, schématiquement, un dispositif tomographique 3D permettant d'effectuer des mesures de l'atténuation ou de l'émission d'un objet ;
- la figure 3 représente un schéma de reconstruction de l'image 3D selon le procédé de l'invention.

Description détaillée de modes de réalisation

L'invention concerne un procédé pour reconstruire une image tridimensionnelle d'un objet qui est définie par les valeurs prises par une propriété de cet objet en un réseau de volumes élémentaires ("voxel") de cette image tridimensionnelle de l'objet.

Ce procédé de l'invention consiste tout d'abord à déterminer des projections mesurées de la propriété de l'objet, à partir de mesures de sommes de ladite propriété sur des lignes localisées par un réseau bidimensionnel associé à des moyens de détection.

Il est à noter que chaque mesure de sommes est effectuée pour une orientation particulière des moyens de détection par rapport à l'objet, ce qui signifie que chaque mesure est réalisée selon une direction différente des autres mesures réalisées au cours du même procédé.

Le procédé de l'invention consiste ensuite, à partir de ces projections mesurées de la propriété de l'objet, à reconstruire une première image tridimensionnelle (3D) de l'objet ; cette première reconstruction peut être réalisée selon des techniques classiques connues de l'homme de l'art.

Le procédé de l'invention consiste ensuite en une estimation, pour chaque volume élémentaire, des paramètres locaux d'un modèle anisotope (décrits plus précisément par la suite) contenant au moins la direction de moindre variation de la propriété de l'objet estimé en fonction de la première image tridimensionnelle reconstruite.

Avantageusement, la direction de moindre variation de la propriété $\theta_i$ est calculée selon l'une des deux méthodes suivantes :

Première méthode :
$\theta_i$ est estimée, pour le volume élémentaire i, à partir de la formule :

$$\theta_i = Arg \ Min_{\theta \in \{\theta_i\}} \ \sum_{j \in V_{\theta_i}} \left| x_i - x_j \right|^2,$$

où $\{\theta_i\}$ est l'ensemble des valeurs que peut prendre la direction de moindre variation, $V_{\theta i}$ est l'ensemble des volumes élémentaires voisins du volume élémentaire choisi i, dans la direction $\theta_i$, et où $x_i$ et $x_j$ sont les valeurs de la propriété des volumes élémentaires respectifs i et j.

Deuxième méthode :
$\theta_i$ est considérée comme la direction du vecteur propre associé à la valeur propre minimale de la matrice d'inertie du gradient $M_i$, calculée au voisinage du volume élémentaire i, et

$$M_i = \sum_{j \in V_i} \left\langle \overline{V} x_j, \, \overline{V} \, x_j^{\, \tau} \right\rangle,$$

où $V_i$ est l'ensemble des volumes élémentaires voisins du volume élémentaire choisi i, $\overline{V} x_j$ est le gradient de la propriété correspondant au volume élémentaire j et $\overline{V}_{x_j}^{\, \tau}$ est la transposée de $\overline{V} x_j$.

Le procédé de l'invention consiste ensuite, à partir de l'image tridimensionnelle reconstruite, à déduire un ensemble de projections calculées de la propriété. Ces projections calculées correspondent à des sommes de la propriété suivant les lignes de mesure passant par au moins un volume élémentaire préalablement choisi.

Le procédé de l'invention consiste ensuite à comparer, pour chaque ligne de sommation passant par le volume élémentaire, chaque projection calculée avec la projection mesurée correspondant au même volume élémentaire, de façon à en déduire une différence de projection sur ces lignes.

Le procédé comporte ensuite une étape qui consiste à déterminer, pour chaque volume élémentaire, et en fonction des paramètres locaux du modèle anisotrope choisi, un coefficient de poids déterminé à partir d'une moyenne pondérée de la valeur de la propriété des volumes élémentaires voisins du volume élémentaire choisi. Cette moyenne pondérée s'exprime par :

$$x_i \left( 1 - \sum_{j \in V_i} \alpha_{ij} \right) + \sum_{j \in V_i} \alpha_{ij} x_j$$

avec :

$$\alpha_{ij} = \frac{\alpha_{i \to j} + \alpha_{i \to j}}{2}$$

$$\alpha_{i \to j} = \begin{cases} 1 & si \quad j \in V_{\theta_i} \\[2mm] e^{-\frac{|x_i - x_j|^2}{K^2}} & si \quad j \in V_{\theta_i}^{\perp} \\[2mm] 0 & sinon \end{cases}$$

ou

$$\alpha_{i \to j} = \begin{cases} 1 & si \quad j \in V_{\theta_i} \\[2mm] \dfrac{1}{1 + \left( \dfrac{|x_i - s_j|}{K} \right)^{\alpha}} & si \quad j \in V_{\theta_i}^{\perp} \\[2mm] 0 & sinon \end{cases}$$

où :

$V_{\theta i}$ est l'ensemble des volumes élémentaires voisins du volume élémentaire i, dans la direction $\theta_i$ ;

$V_{\theta i}^{\perp}$ est l'ensemble des volumes élémentaires appartenant au plan transversal à la direction $\theta_i$ et voisin du volume élémentaire i ; et

K, $\alpha$ sont des paramètres préalablement fixés.

Ce coefficient de poids est donc une moyenne pondérée des volumes élémentaires voisins du volume élémentaire en cours de mise à jour et qui fait intervenir la direction principale du modèle.

Les points de cette moyenne sont définis à partir du modèle local considéré, afin de réaliser un lissage suivant la direction principale du modèle et un rehaussement du contour suivant une ou deux direction(s) transverse(s) à cette direction principale. Il est à noter que le rehaussement du contour est d'autant plus important que le gradient suivant la direction principale du modèle est faible.

Plus précisément, les poids de cette moyenne sont définis à partir du modèle local de la façon suivante :

- pour le volume élémentaire central, le poids est 1 ;
- suivant la direction principale définie par le modèle, les poids favorisent un lissage de l'objet ; le poids est alors une constante (par exemple, 1) ;
- suivant les directions transverses à cette direction principale, définies localement par le modèle, le poids peut être nul ou bien il peut être défini à partir d'une fonction de conductance. Cette fonction de conductance est une fonction strictement décroissante, partant de 1 à l'origine, convergente de façon asymptotique vers 0 à l'infini et avec un point d'inflexion unique dont la position est définie par le seuil du gradient du modèle local, multiplié par le gradient suivant la direction principale du modèle.

Le poids du volume élémentaire voisin est alors la valeur de cette fonction prise pour l'abscisse "gradient transverse".

Pour les volumes élémentaires voisins, non cités précédemment, le poids est nul.

Ensuite, le procédé propose d'effectuer une mise à jour de chacun des volumes élémentaires à partir de la différence de projection et de la moyenne pondérée déterminés dans les étapes précédentes. Cette mise à jour s'effectue volume élémentaire par volume élémentaire et sur toutes les projections mesurées.

Enfin, le procédé consiste à réitérer, la plupart des étapes précédentes, jusqu'à ce que l'image tridimensionnelle désirée de l'objet soit obtenue.

Selon un mode de réalisation de la réitération est effectuée à partir de l'étape de calcul de la projection calculée.

Selon un autre mode de réalisation, la réitération s'effectue à partir de l'étape dans laquelle les paramètres locaux du modèle anisotrope de l'objet sont estimés. Ce modèle anistrope est donc remis à jour à chaque itération du procédé de façon à apporter une amélioration supplémentaire au modèle de façon à améliorer la définition de l'image tridimensionnelle de la propriété obtenue en finalité.

Sur la figure 3, on a représenté au moyen d'un diagramme fonctionnel, le traitement itératif du procédé de reconstruction d'images tridimensionnelles de l'invention.

Comme sur la figure 1, la référence PM représente les projections mesurées, PC représente les projections calculées et I3D représente l'image tridimensionnelle de l'objet à reconstruire. Comme dans le procédé schématisé en figure 1, les projections réelles PM et les projections calculées PC sont comparées lors d'une étape de comparaison E1 et leur différence (appelée "différence de projection") est utilisée pour la mise à jour E2 de l'image tridimensionnelle I3D précédente, c'est-à-dire l'image 3D reconstruite lors de l'itération précédente. La mise à jour E2 de l'image ID3 prend en compte également les paramètres locaux du modèle anisotrope ML estimé lors de l'itération précédente.

Selon le mode de réalisation préféré de l'invention, qui est celui montré sur la figure 3, ces paramètres du modèle anistrope ML sont remis à jour à chaque itération du procédé. Cette remise à jour est représentée par l'étape E5 qui montre, qu'après chaque réactualisation de l'image tridimensionnelle reconstruite, les paramètres locaux du modèle anistrope ML sont réactualisés afin d'être réutilisés pour la nouvelle mise à jour effectuée lors de l'itération suivante du procédé.

A partir de l'image tridimensionnelle I3D reconstruite et remise à jour, de nouvelles projections calculées PC sont déterminées, au cours de l'étape de reprojection E4.

Cette reprojection E4 se fait parallèlement à l'étape de réestimation E5 des paramètres locaux du modèle anistrope ML.

On a représenté également sur cette figure, le cas dans lequel on effectue un lissage des directions principales ML à chaque itération. Cette régularisation des directions est représentée par l'étape E6 sur la figure 3 et s'exprime par la fomule suivante :

$$\theta_i = Arg\ Min \qquad \left( \sum_{j \in V_i} x_j\ \sin^2(A_{ij}) \right)$$

$$\theta_i \in \{\theta_i\}$$

où :

$A_{ij}$ est l'angle formé par les directions $\theta_i$ et $\theta_j$.

Le procédé de l'invention consiste donc en une reconstruction de type algébrique, qui est enrichie par l'utilisation de paramètres locaux d'un modèle anisotrope estimé sur l'objet en cours de reconstruction et utilisé pour la mise à jour de cette reconstruction.

Un tel modèle anisotrope définit localement la direction 3D de moindre variation de l'atténuation, ce qui signifie que, selon cette direction, il filtre le bruit tandis qu'il assure un rehaussement du contour de l'image de l'objet dans les directions transverses à cette direction de moindre variation. Cette direction de moindre variation sera appelée direction principale.

Ce modèle assure donc, en parallèle, un lissage suivant la direction principale et un rehaussement des contours, ce qui correspond à des moyennages dans les directions transverses à la direction principale, ce qui permet d'augmenter le contraste et la définition de l'image 3D obtenue en finalité.

Plus précisément, ce modèle est défini par :

- un paramètre de direction locale (ou principale) estimé en chaque point de l'image 3D reconstruite ; une méthode pour estimer cette direction locale est de rechercher la direction qui maximise une moyenne locale sur un nombre de points prédéfini (par exemple : trois points) suivant un ensemble de directions discrètes réparties uniformément dans l'espace.
- une mesure de gradient suivant cette direction locale et une mesure de gradient suivant les deux directions transverses ; le gradient local suivant une direction peut être estimé à partir de différences finies.

Il peut également être défini par un paramètre de pertinence qui est calculé en chaque point de l'image 3D et qui définit la pertinence de l'utilisation de la direction principale choisie, c'est-à-dire qui définit si l'on se trouve dans une zone de forte atténuation correspondant à l'objet. Ce paramètre de pertinence est en fait un paramètre de pondération utilisé pour définir, lors de la mise à jour, l'influence de l'effet du modèle local par rapport à l'attache des projections réelles.

En plus de ces paramètres, dits "locaux", le modèle est défini par un paramètre global, à savoir un seuil sur le gradient. Ce paramètre global détermine l'efficacité du rehaussement transverse à partir de la valeur du gradient selon la direction locale.

Le modèle anisotrope défini précédemment est donc estimé localement à partir d'une image reconstruite existante. Pour cela, il est donc nécessaire d'avoir une première estimation de l'image tridimensionnelle de l'objet, cette image étant obtenue par une reconstruction sans modèle du type classique ou par une reconstruction avec une contrainte de régularisation isotrope. Cette reconstruction de l'image tridimensionnelle constitue la première image 3D de l'objet.

Un premier modèle local peut donc être estimé à partir de cette première image 3D. Selon un mode de réalisation, ce modèle sera conservé tout au long du procédé, ce qui signifie que les paramètres définissant le modèle resteront constants pour toute la suite du procédé. Selon un autre mode de réalisation de l'invention, les paramètres définissant le modèle seront réactualisés au cours des différentes itérations.

Le volume de directions 3D utilisé dans le modèle peut également être régularisé au fur et à mesure du procédé dans le but d'assurer une continuité dans les directions. Cette régularisation peut être effectuée par un algorithme de type ICM (iterated conditionnel mode) qui minimise les écarts de directions entre deux volumes élémentaires voisins du volume modèle. Cette régularisation peut être effectuée, par exemple, à chaque remise à jour complète des directions utilisées dans le modèle, c'est-à-dire à chaque réitération de l'étape consistant à estimer les paramètres locaux du modèle. Cet algorithme ICM a de plus la caractéristique de n'être pas sensible à l'ordre des projections utilisées et de n'avoir pas tendance à reconstruire dans un premier temps les basses fréquences, puis ensuite seulement les hautes fréquences, contrairement à certains algorithmes, tels que l'algorithme du gradient.

L'utilisation d'un modèle anisotrope tel que défini précédemment permet donc d'améliorer le contraste et le niveau de résolution de l'image 3D reconstruite. En particulier, dans le cas de l'imagerie médicale, l'utilisation d'un tel modèle anisotrope assure une reconstruction suffisamment précise de l'image 3D pour permettre au médecin de détecter sur l'image une anomalie d'un organe même dans le cas où l'organe considéré est complexe comme, par exemple, l'arbre vasculaire.

Ce procédé de reconstruction d'une image tridimensionnelle d'un objet, conforme à l'invention, peut être utilisée, par exemple, pour la réalisation d'une cartographie de l'atténuation des rayonnements par un objet. Dans ce cas, la réalisation de la cartographie d'atténuation consiste à effectuer des acquisitions de mesure en transmission de l'objet puis à en déduire des projections de l'atténuation, par des procédés classiques, tels qu'une transformation logarithmique du rapport avec une acquisition en transmission sans objet, une correction d'uniformité, etc. Il consiste ensuite à reconstruire une carte d'atténuation au moyen du procédé de reconstruction de type algébrique, associé au modèle anisotrope, conforme à l'invention.

Comme dans l'art antérieur, on peut utiliser, pour effectuer les acquisitions des mesures en transmission, un système tomographique 3D muni d'une source de rayonnements X, d'un détecteur et de l'objet à étudier qui est placé entre la source et le détecteur. On peut également utiliser une chaîne d'acquisition, c'est-à-dire un système comportant plusieurs sources de rayonnement et plusieurs détecteurs, chaque source étant associée à un détecteur.

Dans le cas d'une réalisation de cartographie pour l'imagerie médicale, l'objet étudié est le patient ou un organe du patient.

Dans le cas de l'imagerie d'atténuation vasculaire, les acquisitions sont faites avant et pendant l'injection de produit de constrate. Le prétraitement des acquisitions comprend entre autre une soustraction logarithmique des acquisitions avant et pendant l'injection de produit de contraste pour une même position de la source de rayonnement et du détecteur.

Dans ce cas d'imagerie d'atténuation vasculaire, le procédé selon l'invention permet de rehausser les bords des vaisseaux, d'améliorer le contraste des petits vaisseaux et d'éliminer certains artéfacts dus à un nombre limité de projections. La cartographie ainsi obtenue est alors suffisamment lisible pour qu'un médecin puisse déterminer les pathologies de son patient à partir de cette cartographie.

A titre indicatif, dans un tel cas, on peut obtenir une cartographie de contraste et de résolution satisfaisants, après cinq itérations du procédé.

Le procédé selon l'invention a donc l'avantage d'améliorer la qualité des images reconstruites en contraste et en résolution aussi bien dans les cas où les conditions d'acquisition sont difficiles (nombre de mesures en atténuation est limité, géométrie pas stable) que dans les cas d'acquisitions dites "normales", c'est-à-dire lorsque la géométrie est relativement stable et le nombre de mesures en transmission tout à fait correct.

Le procédé de l'invention permet donc d'avoir des contraintes sur le dispositif d'acquisition bien moins élaborées que pour les procédés classiques, c'est-à-dire une géométrie d'acquisition moins rigide, une vitesse de rotation qui peut être plus lente, etc., ceci pour obtenir une qualité de cartographie au moins aussi bonne que celle obtenue dans des procédés classiques dans lesquels les contraintes étaient très lourdes (nombre de projections important, géométrie rigide, vitesse de rotation rapide,...). Pour une qualité de cartographie au moins aussi bonne, le procédé de l'invention assure donc une réalisation de cartographie pour un coût plus faible.

**Revendications**

1. Procédé de reconstruction d'une image tridimensionnelle d'un objet (I3D), définie par des valeurs prises par une propriété de l'objet (1) en un réseau de volumes élémentaires de l'image tridimensionnelle de l'objet, consistant :

   - à déterminer, à partir des acquisitions de mesure, des projections mesurées (PM) de la propriété correspondant à des mesures de sommes de ladite propriété selon des lignes localisées par un réseau bidimensionnel associé à des moyens de détection (5), chaque acquisition étant effectuée pour une orientation particulière des moyens de détection par rapport à l'objet ;
   - à reconstruire l'image 3D de l'objet par itération,

   **caractérisé en ce que** cette reconstruction de l'image 3D de l'objet consiste :

   a) à partir des projections mesurées, à effectuer une reconstruction d'une première image 3D de l'objet ;
   b) à estimer, pour chaque volume élémentaire, des paramètres locaux définissant un modèle anistrope (ML) utilisant une direction de moindre variation de la propriété, de l'objet en fonction de cette image 3D reconstruite ; et

   pour tous les volumes élémentaires et toutes les projections mesurées :

   c) à partir de l'image 3D reconstruite, à déduire des projections calculées (PC) de la propriété passant par au moins un volume élémentaire préalablement choisi ;
   d) à comparer (E1) au moins une projection calculée avec la projection mesurée correspondant au même volume élémentaire pour en déduire une différence de projection ;

e) à déterminer, pour chaque volume élémentaire, un coefficient de poids en fonction des paramètres du modèle anisotrope et des valeurs de la propriété sur les volumes élémentaires voisins dudit volume élémentaire choisi ; et

f) à effectuer une mise à jour (E2) de chaque volume élémentaire, volume élémentaire par volume élémentaire, à partir de la différence de projection et d'une moyenne pondérée par les coefficients de poids de la valeur de la propriété des volumes élémentaires voisins du volume élémentaire choisi pour obtenir une nouvelle image 3D de l'objet ; puis

g) à réitérer au moins les étapes c) à f) en prenant comme image reconstruite, la nouvelle image 3D, jusqu'à l'obtention de l'image 3D désirée de l'objet.

2. Procédé de reconstruction d'une image tridimensionnelle selon la revendication 1, **caractérisé en ce qu'**il consiste, à chaque réitération, à re-estimer, pour chaque volume élémentaire, les paramètres locaux définissant un nouveau modèle anisotrope en fonction de la dernière mise à jour de l'image 3D reconstruite de la propriété.

3. Procédé de reconstruction d'une image tridimensionnelle selon l'une quelconque des revendications 1 et 2, **caractérisé en ce qu'**il consiste à effectuer un lissage suivant la direction du modèle anisotrope, en fonction des coefficients de poids déterminés à l'étape e).

4. Procédé de reconstruction d'une image tridimensionnelle selon la revendication 3, **caractérisé en ce qu'**il consiste en outre à effectuer un ou plusieurs moyennage(s) suivant, respectivement, une ou plusieurs directions transverses à la direction principale du modèle local.

5. Procédé de reconstruction d'une image tridimensionnelle selon l'une quelconque des revendications 1 à 4, dans lequel la propriété de l'objet est l'atténuation de rayonnements émis par au moins une source de rayonnements vers au moins un moyen de détection associé à ladite source de rayonnements, à travers ledit objet, ladite source étant apte à prendre plusieurs positions par rapport à l'objet et dans lequel l'image 3D obtenue est une cartographie d'atténuation; **caractérisé en ce qu'**il consiste tout d'abord pour chaque position de la source, à effectuer une acquisition de mesure de transmission des rayonnements par l'objet, à partir de laquelle est déterminée une projection réelle de l'atténuation.

**Claims**

1. Process for the reconstruction of a three-dimensional image of an object (I3D), defined by values assumed by a property of the object (1) in an array of elementary volumes of the 3D image of the object, consisting:

   - of determining on the basis of measurement acquisitions, by prior processing, measured projections (PM) of the property corresponding to measurements of sums of said property in accordance with lines localized by a bidimensional array associated with detection means (5), each acquisition being performed for a particular orientation of the detection means with respect to the object;
   - reconstructing the 3D image of the object by iteration; **characterized in that** said reconstruction of the 3D image of the object consists:

     a) on the basis of the measured projections, carrying out a reconstruction of a first 3D image of the object;
     b) estimating, for each elementary volume, local parameters defining an anisotropic model (ML) using a direction of least variation of the property, as a function of said reconstructed 3D image;
     and for all the elementary volumes and all the measured projections:
     c) on the basis of the reconstructed 3D image, deducing calculated projections (PC) of the property passing through at least one previously chosen elementary volume;
     d) comparing (E1) at least one calculated projection with the measured projection corresponding to the same elementary volume in order to deduce therefrom a projection difference;
     e) determining, for each elementary volume, a weighting factor as a function of the parameters of the anisotropic model, and values of the property on neighbouring elementary volumes of said chosen elementary volume; and
     f) carrying out an updating (E2) of each elementary volume, elementary volume by elementary volume, on the basis of the projection difference and a mean weighted by the weighting factor of the value of the property of the elementary volumes adjacent to the chosen elementary volume, in order to obtain a new 3D image of the object; then

g) reiterating at least stages c) to f), taking as the reconstructed image the new 3D image, until the desired 3D image of the object is obtained.

2. Process for the reconstruction of a three-dimensional image according to claim 1, **characterized in that** it consists, for each reiteration, reestimating for each elementary volume, the local parameters defining a new anisotropic model as a function of the last updating of the reconstructed 3D image of the property.

3. Process for the reconstruction of a three-dimensional image according to either of the claims 1 and 2, **characterized in that** it consists of performing a smoothing in the direction of the anisotropic model, as a function of weighting factors determined in stage e).

4. Process for the reconstruction of a three-dimensional image according to claim 3, **characterized in that** it also consists of performing one or more averaging operations respectively in one or two directions transverse to the principal direction of the local model.

5. Process for the reconstruction of a three-dimensional image according to any one of the claims 1 to 4, wherein the property of the object is the attenuation of the rays emitted by at least one radiation source towards at least one detection means associated with said radiation source, through said object, said source being able to assume several positions relative to the object and wherein the 3D image obtained is an attenuation cartography, **characterized in that** it firstly consists, for each position of the source, effecting a measurement acquisition of the transmission of the rays by the object and on the basis of which a real projection of the attenuation is determined.

## Patentansprüche

1. Rekonstruktionsverfahren eines dreidimensionalen Bildes eines Objekts (I3D), definiert durch Werte, die dank einer Eigenschaft des Objekts (1) in einem Elementarvolumen-Gitter des Bildes des dreidimensionalen Objekts gemessen werden, darin bestehend:

   - aufgrund von Messwerterfassungen gemessene Projektionen (PM) der Eigenschaft zu bestimmen, die Summenmessungen der genannten Eigenschaft gemäß Zeilen entsprechen, lokalisiert durch ein zweidimensionales Gitter, verbunden mit Detektionseinrichtungen (5), wobei jede Erfassung für eine bestimmte Ausrichtung der Detektionseinrichtungen in Bezug auf das Objekt durchgeführt wird;
   - das 3D-Bild des Objekts durch Iteration zu rekonstruieren,

   **dadurch gekennzeichnet, dass** diese Rekonstruktion des 3D-Bilds des Objekts darin besteht:

   a) aufgrund der gemessenen Projektionen eine Rekonstruktion eines ersten 3D-Bilds des Objekts durchzuführen;
   b) für jedes Elementarvolumen lokale Parameter zu veranschlagen, die ein anisotropes Modell (ML) des Objekts in Abhängigkeit von diesem rekonstruierten 3D-Bild definieren, wobei eine Richtung geringer Veränderung der Eigenschaft benutzt wird; und
   für alle Elementarvolumen und alle gemessenen Projektionen:

   c) aufgrund des rekonstruierten 3D-Bilds durch wenigstens ein vorher gewähltes Elementarvolumen berechnete Projektionen (PC) abzuleiten;
   d) wenigstens eine berechnete Projektion mit der demselben Elementarvolumen entsprechenden, gemessenen Projektion zu vergleichen (E1), um daraus eine Projektionsdifferenz abzuleiten;
   e) für jedes Elementarvolumen einen Gewichtungskoeffizienten in Abhängigkeit der Parameter des anisotropen Modells und der Werte der Eigenschaft bezüglich der Nachbar-Elementarvolumen des genannten gewählten Elementarvolumens zu bestimmen; und
   f) aufgrund der Projektionsdifferenz und einem durch die Gewichtungskoeffizienten bewerteten bzw. gewichteten Mittelwert des Werts der Eigenschaft der Nechbar-Elementarvolumen des gewählten Elementarvolumens eine Aktualisierung (E2) jedes Elementarvolumens durchzuführen, Elementarvolumen für Elementarvolumen, um ein neues 3D-Bild des Objekts zu erhalten; dann

g) wenigstens die Schritte c) bis f) zu wiederholen, indem man als rekonstruiertes Bild das neue 3D-Bild nimmt, bis zur Erlangung des erwünschten 3D-Bilds des Objekts.

2. Rekonstruktionsverfahren eines dreidimensionalen Bildes nach Anspruch 1, **dadurch gekennzeichnet, dass** es darin besteht, bei jeder Wiederholung für jedes Elementarvolumen die lokalen Parameter neu zu veranschlagen, die ein neues anisotropes Modell in Abhängigkeit von der letzten Aktualisierung des rekonstruierten 3D-Bilds der Eigenschaft definieren.

3. Rekonstruktionsverfahren eines dreidimensionalen Bildes nach einem der Ansprüche 1 und 2, **dadurch gekennzeichnet, dass** es darin besteht, eine Glättung entsprechend der Richtung des anisotropen Modells durchzuführen, in Abhängigkeit von den in dem Schritt e) bestimmten Gewichtungskoeffizienten.

4. Rekonstruktionsverfahren eines dreidimensionalen Bildes nach Anspruch 3, **dadurch gekennzeichnet, dass** es darin besteht, außerdem eine oder mehrere Mittelwertbildung(en) entsprechend jeweils einer oder mehrerer zu der Hauptrichtung des lokalen Modells transversalen Richtung(en) durchzuführen.

5. Rekonstruktionsverfahren eines dreidimensionalen Bildes nach einem der Ansprüche 1 bis 4, bei dem die Eigenschaft des Objekts die Dämpfung der Strahlung durch dieses Objekt ist, die durch wenigstens eine Strahlungsquelle abgestrahlt wird in Richtung wenigstens einer dieser Strahlungsquelle zugeordneten Detektionseinrichtung, wobei die genannte Quelle fähig ist, in Bezug auf das Objekt mehrere Positionen einzunehmen, und bei dem das hergestellte 3D-Bild eine Dämpfungskartographie ist,
**dadurch gekennzeichnet, dass** es zunächst für jede Position der Quelle darin besteht, eine Transmissionsmesswert-Erfassung der Strahlung durch das Objekt durchzuführen, aufgrund der eine reelle Projektion der Dämpfung bestimmt bzw. ermittelt wird.

FIG. 2

FIG. 1

FIG. 3